# EUROPEAN PATENT APPLICATION

(11) **EP 4 611 167 A1**
(43) Date of publication of application: **03.09.2025**
(21) Application number: 23892052.4
(22) Date of filing: 16.11.2023
(51) Int. Cl.: H01M 50/59, H01M 50/586, H01M 50/531, B23K 26/364, H01M 50/107

(54) **ELECTRODE ASSEMBLY, BATTERY INCLUDING SAME, AND BATTERY PACK AND AUTOMOBILE INCLUDING SUCH BATTERY**

(30) Priority: 16.11.2022 KR 20220153750
(71) Applicant: LG Energy Solution, Ltd., Seoul 07335 (KR)
(72) Inventor: KIM, Sang-Yeol, Daejeon 34122 (KR); PARK, Jong-Sik, Daejeon 34122 (KR); KIM, Hak-Kyun, Daejeon 34122 (KR); LEE, Jae-Eun, Daejeon 34122 (KR); LEE, Je-Jun, Daejeon 34122 (KR)
(74) Representative: Goddar, Heinz J.
(86) International application number: PCT/KR2023/018495
(87) International publication number: WO 2024/106989

(57) **Abstract**

Disclosed is an electrode assembly having a structure in which a stack including a first electrode, a second electrode, and a separator interposed therebetween is wound. The first electrode and the second electrode have an uncoated portion provided at a long side end and not coated with an active material and a coated portion coated with the active material, respectively. On a first surface of the first electrode and a second surface opposite to the first surface, a first insulation layer and a second insulation layer extending by a predetermined length from a region including a boundary between the coated portion and the uncoated portion toward an end of the uncoated portion are provided, respectively.

## Description

### TECHNICAL FIELD

The present disclosure relates to an electrode assembly, a battery including the same, and a battery pack and a vehicle including the battery.

The present application claims priority to Korean Patent Application No. 10-2022-0153750 filed on November 16, 2022 in the Republic of Korea, the disclosures of which are incorporated herein by reference.

### BACKGROUND ART

In a cylindrical secondary battery, a jelly roll type electrode assembly in which a positive electrode tab and a negative electrode tab extend up and down along a height direction of a battery can may be applied to maximize current collection efficiency.

In the above structure, there is a possibility that movement such as meandering of the positive or negative electrode may occur. In this case, the end of the positive electrode or the negative electrode may be located near the end of the separator. Therefore, when the positive electrode or the negative electrode is located at the end of the separator or protrudes outward than the end of the separator due to movement such as meandering of the positive electrode or the negative electrode, electrical contact occurs between the positive electrode and the negative electrode. Alternatively, if the separator is damaged for any reason, electrical contact may occur between the positive and the negative electrodes. As a result, a short circuit may occur inside the battery. If a short circuit occurs inside the battery, heat generation or explosion of the battery may occur. Therefore, it is necessary to provide an insulating member to effectively prevent electrical contact between the positive electrode and the negative electrode.

Therefore, there is a need to find a way to provide a battery cell that has low internal resistance of the secondary battery and also has a low risk of short circuit, and a battery pack and a vehicle including the battery cell.

### DISCLOSURE

### Technical Problem

The present disclosure is designed to solve the problems of the related art, and therefore the present disclosure is directed to reducing an internal resistance of a battery.

The present disclosure is also directed to effectively preventing an internal short circuit of the battery.

However, the technical object to be solved by the present disclosure is not limited to the above, and other objects not mentioned herein will be clearly understood by those skilled in the art from the following disclosure.

### Technical Solution

In one aspect of the present disclosure, there is provided an electrode assembly having a structure in which a stack including a first electrode, a second electrode, and a separator interposed therebetween is wound, wherein the first electrode and the second electrode have an uncoated portion provided at a long side end and not coated with an active material and a coated portion coated with the active material, respectively, and wherein on a first surface of the first electrode and a second surface opposite to the first surface, a first insulation layer and a second insulation layer extending by a predetermined length from a region including a boundary between the coated portion and the uncoated portion toward an end of the uncoated portion are provided, respectively.

The uncoated portion may include a plurality of uncoated portion notching valleys formed along a winding direction of the electrode assembly, and a plurality of segments formed to be spaced apart from each other along the winding direction may be provided so that the plurality of uncoated portion notching valleys are respectively interposed therebetween.

Each of the first insulation layer and the second insulation layer has an insulation layer notching valley formed at a position corresponding to the uncoated portion notching valley with a depth corresponding to a position corresponding to a depth of the uncoated portion notching valley.

In a region where the insulation layer notching valley is formed, an edge cut surface of each of the plurality of segments may be exposed to the outside of the first insulation layer on the first surface of the first electrode, and an edge cut surface of each of the plurality of segments may not be exposed to the outside of the second insulation layer on the second surface of the first electrode.

The first surface of the first electrode may be a surface facing the outside of the electrode assembly, and the second surface of the first electrode may be a surface facing the inside of the electrode assembly.

In a region where the insulation layer notching valley is formed, an edge cut surface of the stack including the first insulation layer, the segment and the second insulation layer may be tilted so that an area of the second insulation layer is larger than an area of the first insulation layer.

The plurality of segments may be bent along a radial direction of the electrode assembly.

Each of the first insulation layer and the second insulation layer may have an insulation layer notching valley formed at a position corresponding to the uncoated portion notching valley with a depth corresponding to a depth of the uncoated portion notching valley.

In a region where the insulation layer notching valley is formed, an edge cut surface of each of the plurality of segments may be exposed to the outside of the first insulation layer on the first surface of the first electrode, and an edge cut surface of each of the plurality of segments may not be exposed to the outside of the second insulation layer on the second surface of the first electrode.

The first surface of the first electrode may be a surface located in a direction opposite to a bending direction of the segment, and the second surface of the first electrode may be a surface located in the bending direction of the segment.

In the region where the insulation layer notching valley is formed, an edge cut surface of the stack including the first insulation layer, the segment and the second insulation layer may be tilted so that an area of the second insulation layer is larger than an area of the first insulation layer.

In another aspect of the present disclosure, there is also provided an electrode assembly manufacturing method, comprising: an electrode preparing step of preparing a first electrode having insulation layers provided on both surfaces thereof; a segment forming step of forming a plurality of segments by irradiating a laser on a first surface of the first electrode to notch an uncoated portion of the first electrode; a stack preparing step of forming a stack including the first electrode; and a winding step of winding the stack to form an electrode assembly.

The electrode assembly manufacturing method may further comprise: allowing the first surface of the first electrode on which laser irradiation is performed to be directed toward the outside of the electrode assembly.

The electrode assembly manufacturing method may further comprise: bending the plurality of segments along a radial direction of the electrode assembly.

The winding step may include a step of allowing the first surface of the first electrode on which laser irradiation is performed to be located in a direction opposite to a bending direction of the segment.

In another aspect of the present disclosure, there is also provided a battery, comprising: the electrode assembly according to the present disclosure; and a housing configured to accommodate the electrode assembly.

In another aspect of the present disclosure, there is also provided a vehicle, comprising the battery pack according to the present disclosure.

In another aspect of the present disclosure, there is also provided a vehicle, comprising the battery pack according to an embodiment of the present disclosure.

### Advantageous Effects

According to one aspect of the present disclosure, the internal resistance of the battery may be greatly reduced, and thus it is possible to provide a battery that is advantageous in rapid charging and rapid discharging.

According to another aspect of the present disclosure, an internal short circuit of the battery may be effectively prevented, and thus it is possible to provide greatly improve the safety of the secondary battery in use.

However, the beneficial effects that can be derived through the present disclosure are not limited to the effects described above, and other advantageous effects not mentioned above will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a jelly roll having a structure in which a stack including a first electrode, a second electrode, and a separator interposed therebetween is wound for manufacturing an electrode assembly according to an embodiment of the present disclosure.
FIG. 2 is a diagram showing a part of a longitudinal cross section of an electrode assembly according to an embodiment of the present disclosure.
FIG. 3 is a drawing showing a first electrode and an insulation layer applied to the electrode assembly according to an embodiment of the present disclosure.
FIG. 4 is a diagram showing the cross-sectional shape of the stack cut by laser notching in the stack including the first electrode shown in FIG. 3 and insulation layers provided on both surfaces thereof.
FIG. 5 is a perspective view showing an electrode assembly according to another embodiment of the present disclosure.
FIG. 6 is a diagram showing a part of a longitudinal cross section of the electrode assembly shown in FIG. 5.
FIG. 7 is a diagram showing a battery according to an embodiment of the present disclosure.
FIG. 8 is a cross-sectional view showing the internal structure of the battery shown in FIG. 7.
FIG. 9 is a diagram showing a battery pack according to an embodiment of the present disclosure.
FIG. 10 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

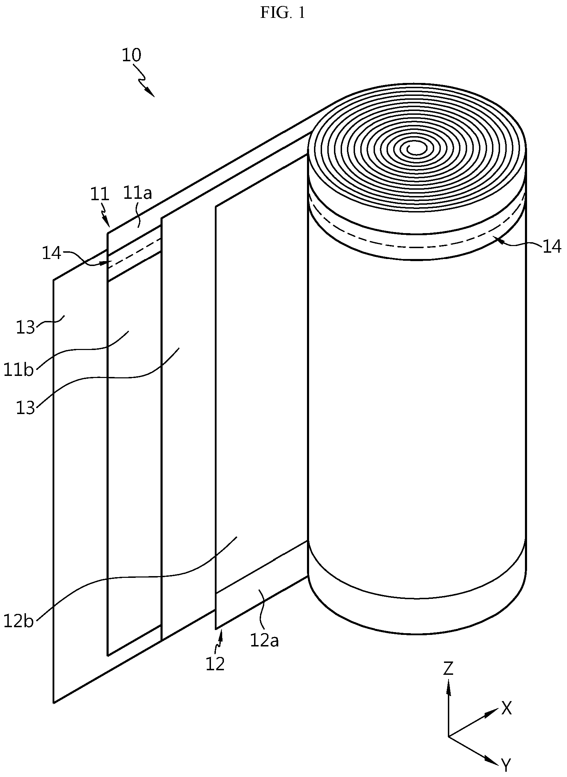

With reference to FIGS. 1 to 4, an electrode assembly 10 according to an embodiment of the present disclosure will be described.

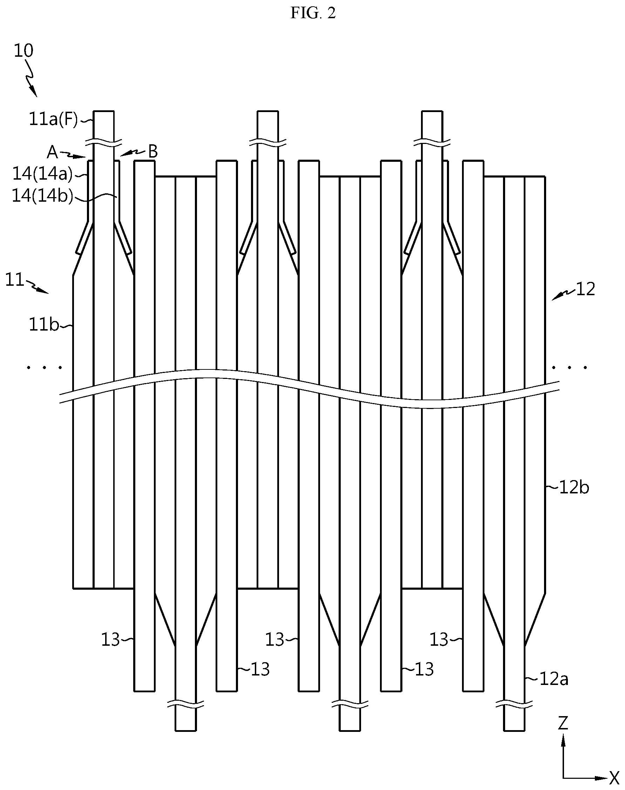

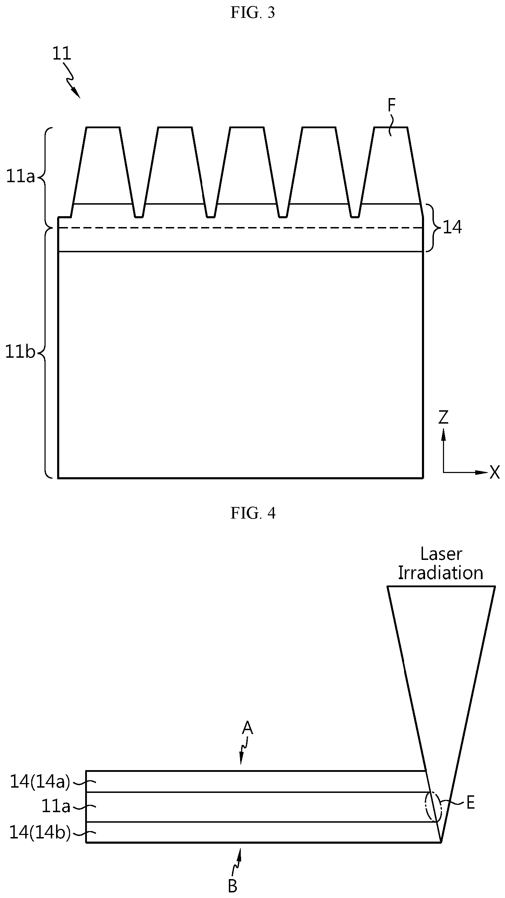

FIG. 1 is a diagram showing a jelly roll having a structure in which a stack including a first electrode, a second electrode, and a separator interposed therebetween is wound for manufacturing an electrode assembly according to an embodiment of the present disclosure, and FIG. 2 is a diagram showing a part of a longitudinal cross section of an electrode assembly according to an embodiment of the present disclosure. FIG. 3 is a drawing showing a first electrode and an insulation layer applied to the electrode assembly according to an embodiment of the present disclosure, and FIG. 4 is a diagram showing the cross-sectional shape of the stack cut by laser notching in the stack including the first electrode shown in FIG. 3 and insulation layers provided on both surfaces thereof.

Referring to FIGS. 1 to 4, the electrode assembly 10 according to an embodiment of the present disclosure may include a first electrode 11, a second electrode 12 and a separator 13 interposed therebetween. The first electrode 11 may be a positive electrode. The second electrode 12 may be a negative electrode.

For example, the electrode assembly 10 may have a structure in which a stack including the first electrode 11, the second electrode 12, and the separator 13 is wound. In other words, the electrode assembly 10 may be a jelly roll type electrode assembly. Meanwhile, an additional separator 13 may be further provided on the outer peripheral surface of the electrode assembly 10 for insulation.

Each of the first electrode 11 and the second electrode 12 may include an uncoated portion 11a, 12a that is not coated with an electrode active material and a coated portion 11b, 12b that is coated with an electrode active material. The uncoated portion 11a, 12a may correspond to a region in which the active material layer is not coated at a long side end of each of the first electrode 11 and the second electrode 12. The coated portion 11b, 12b is a region excluding the uncoated portion 11a, 12a, and may be a region that is coated with an active material layer. The uncoated portion 11a, 12a may be used as an electrode tab by itself.

The first electrode 11 and the second electrode 12 may be arranged so that the uncoated portion 11a of the first electrode 11 and the uncoated portion 12a of the second electrode 12 are located at opposite sides. For example, in the electrode assembly 10, the uncoated portion 11a of the first electrode 11 may extend in the upper direction of the electrode assembly 10, and the uncoated portion 12a of the second electrode 12 may extend in the lower direction of the electrode assembly 10.

Meanwhile, the coated portion 11b, 12b may include a sliding portion in which the thickness of the active material layer is reduced compared to the central region of the coated portion 11b, 12b. For example, referring to FIG. 2, each of the first electrode 11 and the second electrode 12 may have a sliding portion, which is a region where the thickness of the active material layer is reduced, at one end or the other end.

The sliding portion may be formed by a sliding phenomenon that occurs near the boundary between the coated portion and the uncoated portion when the electrode active material is coated on the electrode current collector. The sliding phenomenon means a phenomenon in which, due to the spread of slurry containing the electrode active material, less electrode active material is coated in the slurry coating boundary region than in regions other than the slurry coating boundary region, so that the slurry in the coating boundary region has a roughly inclined shape. Due to the sliding phenomenon, a sliding portion, which has a shape inclined substantially downward along a direction from the coated portion 11b, 12b toward the uncoated portion 11a, 12a, may be formed at the edge of the coated portion 11b, 12b. In this way, the sliding phenomenon that occurs during the process of coating the active material may become more severe during the process of drying the active material. In other words, when the electrode 11, 12, on which the sliding portion has already been formed, is dried as a whole, the solvent contained in the slurry evaporates so that the slurry volume decreases, and thus the sliding phenomenon may become more severe near the boundary between the region coated with the electrode active material and the region not coated with the electrode active material.

The sliding portion may be formed in a boundary region between the coated portion 11b, 12b and the uncoated portion 11a, 12a. For example, the sliding portion may be provided at one end of the first electrode 11 and the other end of the second electrode 12, respectively. That is, the sliding portion of the coated portion 11b provided in the first electrode 11 and the sliding portion of the coated portion 12b provided in the second electrode 12 may be provided in opposite directions. For example, referring to FIG. 2, the sliding portion of the first electrode 11 may be formed upward along the winding axis direction (direction parallel to the Z axis), and the sliding portion of the second electrode 12 may be formed in the opposite direction, namely downward, along the winding axis direction.

Meanwhile, the length of the coated portion 11b provided in the first electrode 11 along the winding axis direction may be shorter than the length of the coated portion 12b provided in the second electrode 12 along the winding axis direction. Also, the coated portion 11b provided in the first electrode 11 may be located further inside along the winding axis direction than the coated portion 12b provided in the second electrode 12. For example, referring to FIG. 2, the length along the winding axis direction of the coated portion 12b provided in the second electrode 12 may be formed to be larger than the length along the winding axis direction of the coated portion 11b provided in the first electrode 11. Moreover, the length along the winding axis direction of the coated portion 11b provided in the first electrode 11 may be shorter than the length along the winding axis direction of the region excluding the sliding portion in the coated portion 12b provided in the second electrode 12. This structure is intended to prevent lithium metal from precipitating since the NP ratio of the positive/negative electrode is reduced to 100% or below.

Meanwhile, the coated portion 11b, 12b may not protrude further outward than the separator 13 along the winding axis direction. In other words, if the coated portion 11b, 12b protrudes further outward along the winding axis direction than the separator 13, the possibility of contact between the first electrode 11 and the second electrode 12 may increase. If this happens, an internal short circuit may occur in the contact region, which may increase the risk of ignition. Therefore, it may be advantageous that the coated portion 11b, 12b does not protrude outward along the winding axis direction than the separator 13. That is, it may be advantageous that the coated portion 11b, 12b is located inner than the separator 13.

Meanwhile, an insulation layer 14a may be provided in a part of the first electrode 11. The insulation layer 14 may include a first insulation layer 14a and a second insulation layer 14b. On the first surface A of the first electrode 11 and the second surface B at the opposite side of the first surface A, a first insulation layer 14a and a second insulation layer 14b extending by a predetermined length from the region including the boundary (portion indicated by a dotted line) of the coated portion 11b, 12b and the uncoated portion 11a, 12a toward the end of the uncoated portion 11a, 12a may be provided. The insulation layer 14 may reduce the possibility of contact between the first electrode 11 and the second electrode 12. The insulation layer 14 may be configured to simultaneously cover at least a part of the uncoated portion 11a and at least a part of the coated portion 11b of the first electrode 11. The insulation layer 14 may be configured to effectively prevent electrical contact between the uncoated portion 11a of the first electrode 11 and the coated portion 12b of the second electrode 12.

The insulation layer 14 may be provided in a region that is likely to face the coated portion 12b provided in the second electrode 12 among the entire region of the first electrode 11. For example, one end along the winding axis direction of the insulation layer 14 may be located at the same height as or further outward than one end along the winding axis direction of the separator 13. For example, one end along the winding axis direction of the insulation layer 14 may be located at the same height as one end along the winding axis direction of the separator 13. The separator 13 may protrude between the first electrode 11 and the second electrode 12 along the winding axis direction at the same height as or higher than the distal end of the second electrode 12, and accordingly it is possible to reduce the possibility of electrical contact between the first electrode 11 and the second electrode 12.

However, the electrode 11, 12 may become meandering tortuous during the winding process for manufacturing the electrode assembly 10, and the separator 13 may be damaged during the process of manufacturing/using the secondary battery. If this phenomenon occurs, the first electrode 11 and the second electrode 12 may contact each other. In particular, if an internal short circuit occurs due to contact between the uncoated portion 11a of the first electrode 11 and the coated portion 12b of the second electrode 12, the possibility of ignition increases greatly. Therefore, in order to prevent electrical contact between the first electrode 11 and the second electrode 12, it may be advantageous that the insulation layer 14 provided on the first electrode 11 extends at least to the same height as or further outward than the one end along the winding axis direction of the separator 13.

However, if the insulation layer 14 covers the entire uncoated portion 11a provided in the first electrode 11, the first electrode 11 cannot function as an electrode tab, so the insulation layer 14 needs to be configured to cover only a part of the uncoated portion 11a provided in the first electrode 11. That is, the uncoated portion 11a may be configured to protrude further outward than the insulation layer 14.

The insulation layer 14 may be an insulating coating layer or an insulating tape provided on the boundary region between the uncoated portion 11a and the coated portion 11b. However, the form of the insulation layer 14 is not limited thereto, and as long as the insulation layer 14 can be attached to the first electrode 11 while securing insulation performance, any form may be adopted in the present disclosure. Meanwhile, the insulation layer 14 may include, for example, an organic SBR binder and alumina oxide to secure insulation performance.

The insulation layer 14 may simultaneously cover at least a part of the uncoated portion 11a and at least a part of the coated portion 11b. For example, the insulation layer 14 may be provided on the boundary region of the coated portion 11b and the uncoated portion 11a. For example, the insulation layer 14 may cover at least a part of the sliding portion.

If the insulation layer 14 is not provided, there is a possibility that an internal short circuit may occur due to contact between the first electrode 11 and the second electrode 12. Therefore, it is desirable that the insulation layer 14 extends to a position where the first electrode 11 and the second electrode 12 do not electrically contact each other.

If the insulation layer 14 covers a part of the coated portion 11b provided in the first electrode 11, capacity loss of the battery occurs, so there is a need to minimize the length of the coated portion covered by the insulation layer 14. However, since there is a possibility that the coated portion 11b provided in the first electrode 11 contacts the second electrode 12, in order to prevent this, the insulation layer 14 may be configured to cover at least a part of the coated portion 11b provided in the first electrode 11.

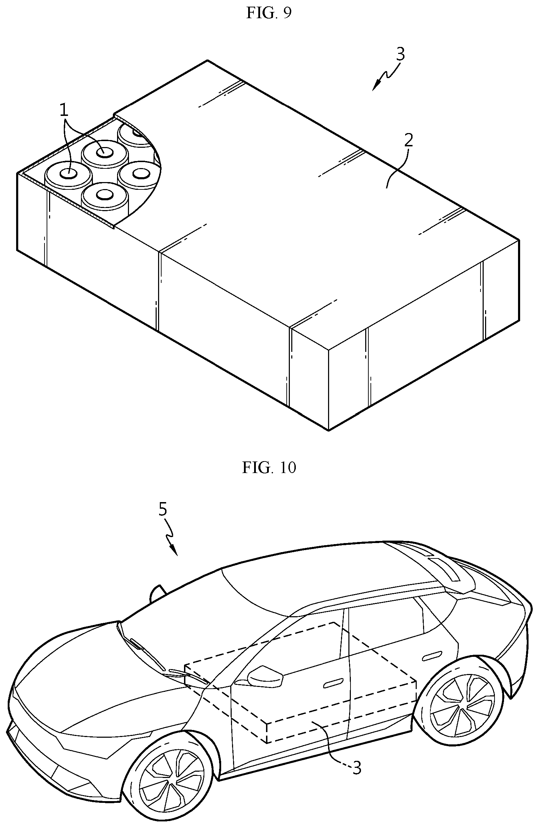

Meanwhile, if the first electrode 11 is a positive electrode and the second electrode 12 is a negative electrode, in consideration of process efficiency, productivity, and the like as well as the risk of a short circuit, the insulation layer 14 may be formed on the uncoated portion 11a of the first electrode 11, and the insulation layer 14 may not be applied to the uncoated portion 12a of the second electrode 12. This is because the risk is greatest when the uncoated portion of the positive electrode and the coated portion of the negative electrode contact each other. The difference in risk in various cases where the positive electrode and the negative electrode contact each other will be described in detail later with reference to FIG. 10. Meanwhile, the present disclosure does not exclude the case where the insulation layer 14 is provided on the uncoated portion 12a of the second electrode 12.

Meanwhile, referring to FIG. 3, the uncoated portion 11a may have a plurality of uncoated portion notching valleys formed along the winding direction of the electrode assembly 10. The uncoated portion notching valley may be formed by cutting and removing a part of the uncoated portion 11a by laser notching. The uncoated portion 11a may include a plurality of segments F that are spaced apart from each other along the winding direction of the electrode 11 so that the plurality of uncoated portion notching valleys are respectively interposed therebetween. Meanwhile, the segment F may also be formed in the uncoated portion 12a of the second electrode 12.

Each of the first insulation layer 14a and the second insulation layer 14b may have an insulation layer notching valley formed at a position corresponding to the uncoated portion notching valley with a depth corresponding to a depth of the uncoated portion notching valley. That is, through a process of removing a part of the uncoated portion 11a by notching the uncoated portion 11a to form the segment F, the insulation layer 14 covering a part of the uncoated portion 11a is also notched together so that a partial region of the insulation layer 14 is also removed.

Meanwhile, referring to FIGS. 3 and 4, in the region where the insulation layer notching valley is formed, on the first surface A of the first electrode 11, the edge cut surface E of each of the plurality of segments F may be exposed to the outside of the first insulation layer 14a. Meanwhile, on the second surface B of the first electrode 11, the edge cut surface E of each of the plurality of segments F may not be exposed to the outside of the second insulation layer 14b. That is, in the region where the insulation layer notching valley is formed, the edge cut surface E of the stack including the first insulation layer 14a, the segment F, and the second insulation layer 14b may be tilted so that the area of the second insulation layer 14b is larger than the area of the first insulation layer 14a.

This is because the width of the laser irradiated for notching gradually decreases from the light source to the irradiation point. Depending on the characteristics of the laser, the cutting surface E formed on the stack of the uncoated portion 11a and the insulation layer 14 by laser notching may not be parallel to the stacking direction but may be tilted at a predetermined angle with respect to the stacking direction.

The first surface A of the first electrode 11 may be a surface facing the outside of electrode assembly 10. The second surface B of the first electrode 11 may be a surface facing the inside of the electrode assembly 10. By arranging the first surface A and the second surface B of the first electrode 11 like this, when the segment F of the first electrode 11 receives a force bending toward the core and/or when the separator between the first electrode 11 and the second electrode 12 is damaged, it is possible to effectively prevent the uncoated portion 11a of the first electrode 11 from contacting the coated portion 12b of the second electrode 12.

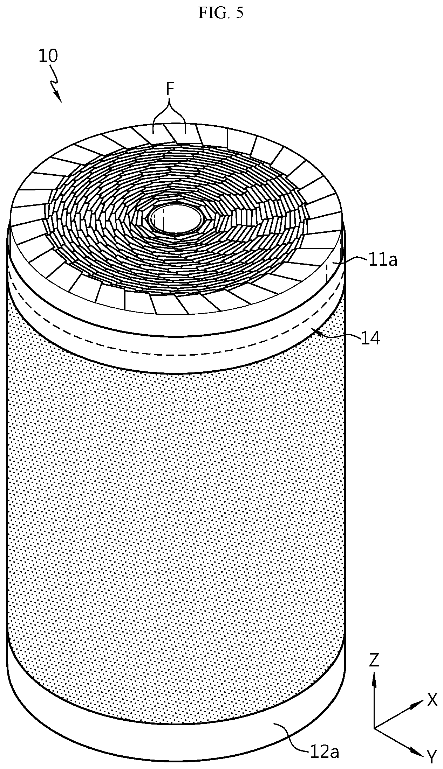

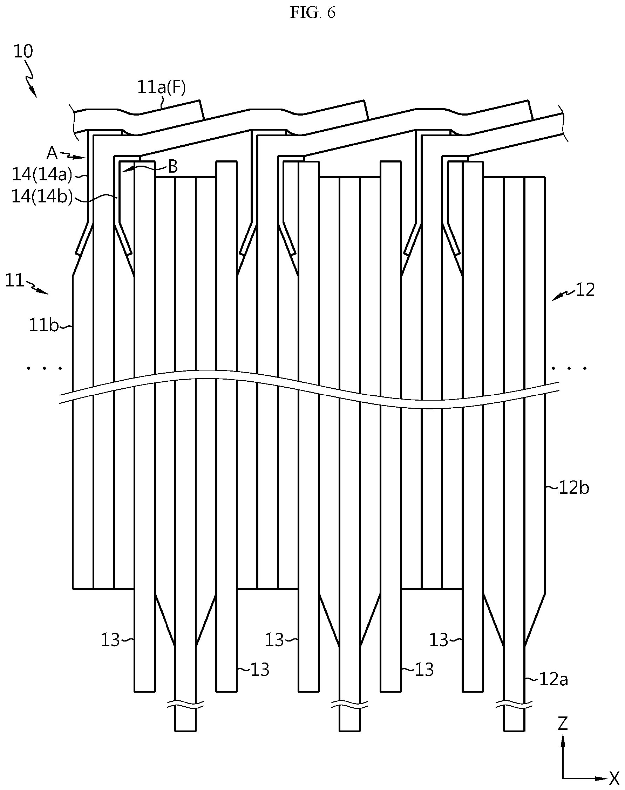

Next, referring to FIGS. 5 and 6 along with FIGS. 3 and 4, an electrode assembly 10 according to another embodiment of the present disclosure will be described.

FIG. 5 is a perspective view showing an electrode assembly according to another embodiment of the present disclosure, and FIG. 6 is a diagram showing a part of a longitudinal cross section of the electrode assembly shown in FIG. 5.

Referring to FIGS. 5 and 6 along with FIGS. 3 and 4, the electrode assembly 10 according to another embodiment of the present disclosure may have a structure in which the plurality of segments F formed in the uncoated portion 11a are bent along the radial direction of the electrode assembly 10. The segments F bent in this way may overlap each other to form a plurality of layers.

As in the former embodiment, each of the first insulation layer 14a and the second insulation layer 14b may have an insulation layer notching valley formed at a position corresponding to the uncoated portion notching valley with a depth corresponding to a depth of the uncoated portion notching valley. In the region where the insulation layer notching valley is formed, on the first surface A of the first electrode 11, the edge cut surface E of each of the plurality of segments F may be exposed to the outside of the first insulation layer 14a, and on the second surface B of the first electrode 11, the edge cut surface E of each of the plurality of segments F may not be exposed to the outside of the second insulation layer 14b.

The first surface A of the first electrode 11 may be a surface located in the opposite direction to the bending direction of the segment F, and the second surface B of the first electrode 11 may be a surface located in the bending direction of the segment F. For example, if the plurality of segments F are bent in a direction toward the winding center of the electrode assembly 10, namely toward the core, the second surface B may be located in a direction toward the inside of the electrode assembly 10, and the first surface A may be located in a direction facing the outside of the electrode assembly 10.

In the region where the insulation layer notching valley is formed, the edge cross section of the stack including the first insulation layer 14a, the segment F, and the second insulation layer 14b may be tilted so that the area of the second insulation layer 14b is larger than the area of the first insulation layer 14a.

Since the electrode assembly 10 of the present disclosure is configured so that the first surface A of the first electrode 11 located in a direction along which laser is irradiated to form the segment F is performed to face the outside of the electrode assembly 10 as above, it is possible to prevent the insulation effect by the insulation layer 14 from deteriorating.

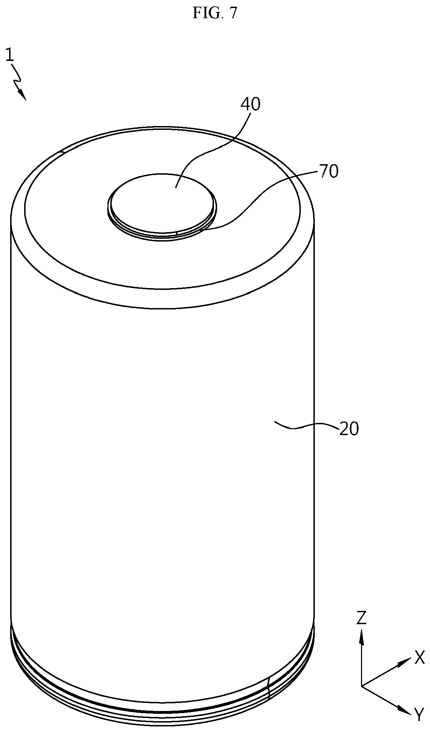

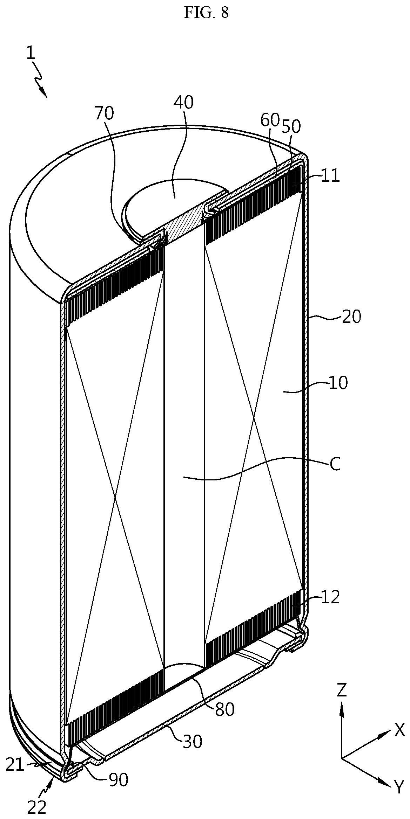

Next, with reference to FIGS. 7 and 8, a battery 1 according to an embodiment of the present disclosure will be described.

FIG. 7 is a diagram showing a battery according to an embodiment of the present disclosure, and FIG. 8 is a cross-sectional view showing the internal structure of the battery shown in FIG. 7.

Referring to FIGS. 7 and 8, the battery 1 according to an embodiment of the present disclosure may include the electrode assembly 10 according to the present disclosure described above. The battery 1 may be, for example, a cylindrical battery. The battery 1 may include an electrode assembly 10, a housing 20, a cap 30, and a terminal 40. In addition to the components described above, the battery 1 may additionally include a first current collector 50 and/or an insulator 60 and/or an insulating gasket 70 and/or a second current collector 80 and/or a sealing gasket 90.

Referring to FIGS. 7 and 8, the housing 20 may be a substantially cylindrical receptor with an open portion formed at the bottom. The housing 20 may include a conductive material such as metal, for example. The housing 20 may include aluminum, for example. The bottom of the housing 20 provided with the open portion will be referred to as an opened end. The side surface (outer circumference) and the upper surface of the housing 20 may be formed as one piece. The upper surface (surface parallel to the X-Y plane) of the housing 20 may have an approximately flat shape. The upper surface located at the opposite side of the opened end is called a closed end. The housing 20 accommodates the electrode assembly 10 through the open portion formed at the bottom, and may also accommodate the electrolyte.

The housing 20 may be electrically connected to the electrode assembly 10. The housing 20 may be electrically connected to one of the first electrode 11 and the second electrode 12. For example, the housing 20 may be electrically connected to the second electrode 12 of the electrode assembly 10. In this case, the housing 20 may have the same polarity as the second electrode 12.

The housing 20 may include a beading portion 21 and/or a crimping portion 22 formed at a lower end thereof. The beading portion 21 may be formed in the lower portion of the electrode assembly 10. The beading portion 21 may be formed by press-fitting the outer peripheral surface of the housing 20. The beading portion 21 may prevent the electrode assembly 10, which may have a size approximately corresponding to the width of the housing 20, from escaping out through the open portion formed at the bottom of the housing 20. The beading portion 21 may function as a support on which the cap 30 is placed.

The crimping portion 22 may be formed below the beading portion 21. The crimping portion 22 may have an extended and bent shape to surround the outer peripheral surface of the cap 30 disposed below the beading portion 21 and a part of the lower surface of the cap 30.

The cap 30 may include, for example, a metal material to secure rigidity. The cap 30 may cover the open portion formed at the bottom of the housing 20. The cap 30 may form the lower surface of the battery 1. In the battery 1 of the present disclosure, the cap 30 may not have polarity even if it is made of a conductive metal material. The fact that the cap 30 does not have polarity may mean that the cap 30 is electrically insulated from the housing 20 and the terminal 40. Accordingly, the cap 30 may not function as a positive electrode terminal or a negative electrode terminal. The cap 30 does not need to be electrically connected to the electrode assembly 10 and the housing 20, and its material does not necessarily have to be metal.

If the housing 20 of the present disclosure includes the beading portion 21, the cap 30 may be placed on the beading portion 21 formed in the housing 20. Also, when the housing 20 of the present disclosure includes the crimping portion 22, the cap 30 may be fixed by the crimping portion 22. The sealing gasket 90 may be interposed between the cap 30 and the crimping portion 22 of the housing 20 to secure airtightness of the housing 20.

The terminal 40 may be electrically connected to any one of the first electrode 11 and the second electrode 12. The terminal 40 may be configured to have an opposite polarity to the housing 20. For example, the terminal 40 may be electrically connected to the first electrode 11. The terminal 40 may be exposed to the outside of the housing 20.

The terminal 40 may include a conductive metal material. The terminal 40 may, for example, penetrate approximately through the center of the closed end formed at the top of the housing 20. A part of the terminal 40 may be exposed to the upper portion of the housing 20 and the remaining part may be located inside the housing 20. The terminal 40 may be fixed on the inner surface of the closed end of the housing 20 by, for example, riveting. The terminal 40 may penetrate the insulator 60 and be coupled with the first current collector 50 or the uncoated portion 11a provided in the first electrode 11. In this case, the terminal 40 may have a first polarity. Therefore, the terminal 40 may function as the first electrode terminal in the battery 1 of the present disclosure. If the terminal 40 has a first polarity, the terminal 40 may be insulated from the housing 20 having a second polarity. The terminal 40 and the housing 20 may be insulated by interposing an insulating gasket 70 therebetween.

The first current collector 50 may be coupled to the upper portion of the electrode assembly 10. For example, the first current collector 50 may be coupled to the uncoated portion 11a provided in the first electrode 11 at the upper portion of the electrode assembly 10. The first current collector 50 may include a conductive metal material. The first current collector 50 may be coupled to the end of the uncoated portion 11a provided in the first electrode 11.

The first current collector 50 may be coupled to a coupling surface formed by bending the end of the uncoated portion 11a provided in the first electrode 11 in a direction parallel to the first current collector 50. The bending direction of the uncoated portion 11a may be, for example, a direction toward the winding center C of the electrode assembly 10. If the uncoated portion 11a has a bent shape as above, the space occupied by the uncoated portion 11a is reduced, which may improve energy density. Also, as the coupling area between the uncoated portion 11a and the first current collector 50 increases, it is possible to improve the coupling strength and reduce the resistance.

The insulator 60 may be provided between the top of the electrode assembly 10 and the inner surface of the housing 20 or between the first current collector 50 coupled to the upper portion of the electrode assembly 10 and the inner surface of the housing 20. The insulator 60 may prevent contact between the uncoated portion 11a provided in the first electrode 11 and the housing 20 and/or between the first current collector 50 and the housing 20. The insulator 60 is accommodated inside the housing 20 and may be configured to block the electrical connection between the uncoated portion 11a provided in the first electrode 11 and the housing 20. Accordingly, the insulator 60 may include a material with insulating properties.

The insulating gasket 70 is interposed between the housing 20 and the terminal 40 to prevent the housing 20 and the terminal 40, which have opposite polarities, from contacting each other. In other words, the insulating gasket 70 blocks the electrical connection between the housing 20 and the terminal 40. As a result, the upper surface of the housing 20 having a roughly flat shape may function as the second electrode terminal of the battery 1.

The second current collector 80 may be coupled to the lower portion of the electrode assembly 10. The second current collector 80 may be made of a conductive metal material. The second current collector 80 may be connected to the uncoated portion 12a provided in the second electrode 12. Also, the second current collector 80 may be electrically connected to the housing 20. The second current collector 80 may be interposed and fixed between the inner surface of the housing 20 and the sealing gasket 90. Alternatively, the second current collector 80 may be welded to the inner wall of the housing 20.

The second current collector 80 may be coupled to a coupling surface formed by bending the end of the uncoated portion 12a provided in the second electrode 12 in a direction parallel to the second current collector 80. The bending direction of the uncoated portion 12a provided in the second electrode 12 may be, for example, a direction toward the winding center C of the electrode assembly 10. If the uncoated portion 12a provided in the second electrode 12 has a bent shape as above, the space occupied by the uncoated portion 12a is reduced, which may improve energy density. Also, the coupling area between the uncoated portion 12a and the second current collector 80 increases, it is possible to improve the coupling strength and reduce the resistance.

The sealing gasket 90 may have an approximate ring shape surrounding the cap 30. The sealing gasket 90 may cover the lower surface, the upper surface, and the side surface of the cap 30 at the same time. The radial length of a portion of the sealing gasket 90 that covers the upper surface of the cap 30 may be less than or equal to the radial length of a portion of the sealing gasket 90 that covers the lower surface of the cap 30. If the radial length of the portion of the sealing gasket 90 that covers the upper surface of the cap 30 is too long, the sealing gasket 90 pressurizes the second current collector 80 in the sizing process of compressing the housing 20 up and down, which may cause the second current collector 80 or the housing 20 to be damaged. Therefore, it may be advantageous that the radial length of the portion of the sealing gasket 90 that covers the upper surface of the cap 30 is kept small to a certain level.

Next, with reference to FIGS. 1 to 6, the method of manufacturing the electrode assembly 10 of the present disclosure will be described.

The method of manufacturing the electrode assembly 10 of the present disclosure may include an electrode preparing step, a segment forming step, a stack preparing step, and a winding step. The electrode preparing step may be a step of preparing a first electrode 11 having insulation layer 14s provided on both surfaces thereof. The segment forming step may be a step of forming a plurality of segments F by irradiating a laser on the first surface A of the first electrode 11 and notching the uncoated portion 11a of the first electrode 11. The stack preparing step may be a step of forming a stack including the first electrode 11. In addition to the first electrode 11, the stack may include a second electrode 12 and a separator 13. The winding step may be a step of winding the prepared stack to form the electrode assembly 10.

The electrode assembly manufacturing method of the present disclosure may include a step of allowing the first surface A of the first electrode 11 on which laser irradiation is performed to be directed toward the outside of the electrode assembly 10. As explained earlier, by directing the first surface A on which laser irradiation is performed to face outward, the risk of a short circuit caused when the cut surface of the segment F is exposed at the edge of the insulation layer 14 by laser irradiation may be eliminated or minimized.

The electrode assembly manufacturing method of the present disclosure may include a step of bending the plurality of segments F in one direction along the radial direction of the electrode assembly 10. In this case, the winding step may include a step of allowing the first surface A of the first electrode 11 on which laser irradiation is performed to be located in a direction opposite to the bending direction of the segment F. As previously explained, by allowing the first surface A on which laser irradiation is performed to be located at the opposite side to the bending direction of the segment F, the risk of a short circuit caused when the cut surface of the segment F is exposed at the edge of the insulation layer 14 by laser irradiation may be eliminated or minimized.

Next, with reference to FIG. 9, a battery pack 3 according to an embodiment of the present disclosure will be described.

FIG. 9 is a diagram showing a battery pack according to an embodiment of the present disclosure.

Referring to FIG. 9, the battery pack 3 according to an embodiment of the present disclosure may include the battery 1 of the present disclosure. The battery pack 3 may include an assembly in which a plurality of batteries 1 are electrically connected, and a pack housing 2 that accommodates the assembly. In the drawing, for convenience of illustration, components such as bus bars, cooling units, and external terminals for electrical connection to the batteries 1 are not depicted.

Next, with reference to FIG. 10, a vehicle 5 according to an embodiment of the present disclosure will be described.

FIG. 10 is a drawing showing a vehicle according to an embodiment of the present disclosure.

Referring to FIG. 10, the vehicle 5 may include the battery pack 3 of the present disclosure. The battery pack 3 may be mounted in the vehicle 5. The vehicle 5 of the present disclosure may be, for example, an electric vehicle, a hybrid electric vehicle, or a plug-in hybrid vehicle. The vehicle may include a four-wheeled vehicle or a two-wheeled vehicle. The vehicle 5 may be configured to operate by receiving power from the battery pack 3 according to an embodiment of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

1: battery
2: pack housing
3: battery pack
5: vehicle
10: electrode assembly
11: first electrode
12: second electrode
11a, 12a: uncoated portion
11b, 12b: coated portion
F: segment
13: separator
14: insulation layer
14a: first insulation layer
14b: second insulation layer
A: first surface
B: second surface
20: housing
21: beading portion
22: crimping portion
30: cap
40: terminal
50: first current collector
60: insulator
70: insulating gasket
80: second current collector
90: sealing gasket

## Claims

1. An electrode assembly having a structure in which a stack including a first electrode, a second electrode, and a separator interposed therebetween is wound,
wherein the first electrode and the second electrode have an uncoated portion provided at a long side end and not coated with an active material and a coated portion coated with the active material, respectively, and
wherein on a first surface of the first electrode and a second surface opposite to the first surface, a first insulation layer and a second insulation layer extending by a predetermined length from a region including a boundary between the coated portion and the uncoated portion toward an end of the uncoated portion are provided, respectively.

2. The electrode assembly according to claim 1,
wherein the uncoated portion includes a plurality of uncoated portion notching valleys formed along a winding direction of the electrode assembly, and
wherein a plurality of segments formed to be spaced apart from each other along the winding direction are provided so that the plurality of uncoated portion notching valleys are respectively interposed therebetween.

3. The electrode assembly according to claim 2,
wherein each of the first insulation layer and the second insulation layer has an insulation layer notching valley formed at a position corresponding to the uncoated portion notching valley with a depth corresponding to a depth of the uncoated portion notching valley..

4. The electrode assembly according to claim 3,
wherein in a region where the insulation layer notching valley is formed, an edge cut surface of each of the plurality of segments is exposed to the outside of the first insulation layer on the first surface of the first electrode, and an edge cut surface of each of the plurality of segments is not exposed to the outside of the second insulation layer on the second surface of the first electrode.

5. The electrode assembly according to claim 4,
wherein the first surface of the first electrode is a surface facing the outside of the electrode assembly, and
wherein the second surface of the first electrode is a surface facing the inside of the electrode assembly.

6. The electrode assembly according to claim 3,
wherein in a region where the insulation layer notching valley is formed, an edge cut surface of the stack including the first insulation layer, the segment and the second insulation layer is tilted so that an area of the second insulation layer is larger than an area of the first insulation layer.

7. The electrode assembly according to claim 2,
wherein the plurality of segments are bent along a radial direction of the electrode assembly.

8. The electrode assembly according to claim 7,
wherein each of the first insulation layer and the second insulation layer has an insulation layer notching valley formed at a position corresponding to the uncoated portion notching valley with a depth corresponding to a depth of the uncoated portion notching valley.

9. The electrode assembly according to claim 8,
wherein in a region where the insulation layer notching valley is formed, an edge cut surface of each of the plurality of segments is exposed to the outside of the first insulation layer on the first surface of the first electrode, and an edge cut surface of each of the plurality of segments is not exposed to the outside of the second insulation layer on the second surface of the first electrode.

10. The electrode assembly according to claim 9,
wherein the first surface of the first electrode is a surface located in a direction opposite to a bending direction of the segment, and
wherein the second surface of the first electrode is a surface located in the bending direction of the segment.

11. The electrode assembly according to claim 8,
wherein in the region where the insulation layer notching valley is formed, an edge cut surface of the stack including the first insulation layer, the segment and the second insulation layer is tilted so that an area of the second insulation layer is larger than an area of the first insulation layer.

12. A battery, comprising:
the electrode assembly according to any one of claims 1 to 11; and
a housing configured to accommodate the electrode assembly.

13. A battery pack, comprising the battery according to claim 12.

14. A vehicle, comprising the battery pack according to claim 13.

15. An electrode assembly manufacturing method, comprising:
an electrode preparing step of preparing a first electrode having insulation layers provided on both surfaces thereof;
a segment forming step of forming a plurality of segments by irradiating a laser on a first surface of the first electrode to notch an uncoated portion of the first electrode;
a stack preparing step of forming a stack including the first electrode; and
a winding step of winding the stack to form an electrode assembly.

16. The electrode assembly manufacturing method according to claim 15, further comprising:
allowing the first surface of the first electrode on which laser irradiation is performed to be directed toward the outside of the electrode assembly.

17. The electrode assembly manufacturing method according to claim 15, further comprising:
bending the plurality of segments along a radial direction of the electrode assembly.

18. The electrode assembly manufacturing method according to claim 17,
wherein the winding step includes a step of allowing the first surface of the first electrode on which laser irradiation is performed to be located in a direction opposite to a bending direction of the segment.
